# EUROPEAN PATENT SPECIFICATION

(11) **EP 3 270 542 B1**
(45) Date of publication and mention of the grant of the patent: **02.10.2019**
(21) Application number: 16764446.7
(22) Date of filing: 09.03.2016
(51) Int. Cl.: H04L 12/24, H04L 12/70, H04L 12/701

(54) **MANAGEMENT APPARATUS, NETWORK MANAGEMENT METHOD, AND STORAGE MEDIUM STORING PROGRAM**
VERWALTUNGSVORRICHTUNG, NETZWERKVERWALTUNGSVERFAHREN UND SPEICHERMEDIUM MIT DARAUF GESPEICHERTEM PROGRAMM
APPAREIL DE GESTION, PROCÉDÉ DE GESTION DE RÉSEAU ET SUPPORT D'INFORMATIONS CONTENANT UN PROGRAMME

(30) Priority: 13.03.2015 JP 2015051223
(43) Date of publication of application: 17.01.2018
(73) Proprietor: NEC Corporation, Minato-ku Tokyo 108-8001 (JP)
(72) Inventor: NISHIOKA, Jun, Tokyo 108-8001 (JP)
(74) Representative: Vossius & Partner Patentanwälte Rechtsanwälte mbB
(86) International application number: PCT/JP2016/001297
(87) International publication number: WO 2016/147613

(56) References cited:
- JP-A- 2005 311 458
- JP-A- 2009 194 628
- US-A1- 2008 232 262
- US-A1- 2009 025 052
- US-A1- 2012 140 671

## Description

### [Technical Field]

The present invention relates to a management apparatus, a network management method, and a storage medium storing a program.

### [Background Art]

To know the traffic volume on each of links constituting a network, statistical information regarding each link needs to be acquired. Hence, to acquire such statistical information regarding each link, methods for acquiring the statistical information from a switch by using a protocol such as Simple Network Management Protocol (SNMP), sFlow, or NetFlow are used.

PTL 1 describes a technique by which notification about a traffic volume is received from a router satisfying a predetermined condition, and a traffic volume on the router other than the volume as notified is estimated.

US 2008/0232262 A1 relates to techniques for discovering opologies of such networks using a closure-based discovery approach.

US 2009/0025052 A1 relates to a switched digital video system for distributing content to a subscriber over a system such as a satellite or cable television system.

NPL 1 describes a technique by which information serving as the basis for acquiring a traffic volume is limited, and a traffic volume is estimated based on the limited information.

### [Citation List]

### [Patent Literature]

[PTL 1] Japanese Unexamined Patent Application Publication No. 2006-013926

### [Non-Patent Literature]

[NPL 1] Yuichi OSHITA et al, "Estimation of Current Traffic Matrices from Long Term Traffic Variations", IEICE TRANSACTIONS on Communications, Vol. E92-B, No. 1, pp. 171-183.

### [Summary of Invention]

### [Technical Problem]

The following analysis is made from viewpoints of the present invention.

As described above, to know the traffic volume on each of links constituting a network, statistical information regarding each link needs to be acquired. To monitor traffic volumes, however, statistical information regarding links has to be collected periodically. However, as the monitored network is larger in size, the traffic volume for acquiring the statistical information is increased, resulting in a greater load imposed on the network. In addition, as the statistical information is acquired at shorter time intervals, a greater load is imposed on switches.

The foregoing techniques described in PTL 1 and NPL 1 may cause an estimation error when a traffic volume is estimated. Thus, the techniques described in PTL 1 and NPL 1 may fail to recognize an accurate traffic volume.

Hence, an object of the present invention is to provide a management apparatus, a network management method, and a storage medium storing a program that contribute to reducing the load caused for acquiring a traffic volume and to knowing an accurate traffic volume.

### [Solution to Problem]

The present invention is defined by the claims. Dependent claims refer to preferred embodiments.

According to a first aspect of the present invention, a management apparatus including the functions described below is provided. The management apparatus includes a topology information acquisition unit that acquires topology information regarding a group of links, each of which has a switch at an endpoint of the link, the switch being included in a group of first switches that are included in a network.

The management apparatus further includes a switch selection unit that selects one or more monitoring target switches forming a set of switches, each of which includes either endpoint of any of links constituting the group of links.

The management apparatus further includes a statistical information acquisition unit that acquires statistical information from the monitoring target switches.

According to a second aspect of the present invention, a network management method including the steps described below is provided.

The network management method includes the step of acquiring topology information regarding a group of links, each of which has a switch at an endpoint of the link, the switch being included in a group of first switches that are included in a network.

The network management method further includes the step of selecting one or more monitoring target switches forming a set of switches, each of which includes either endpoint of any of links constituting the group of links.

The network management method further includes the step of acquiring statistical information from the monitoring target switches.

Note that this method is associated with a certain machine, which is a management apparatus that is connected to switches and acquires statistical information from the switches.

According to a third aspect of the present invention, a storage medium storing a program including the processes described below is provided. The storage medium storing a program stores a program for causing a computer controlling a management apparatus connected to a group of first switches to execute the process of acquiring topology information regarding a group of links, each of which has a switch at an endpoint of the link, the switch being included in the group of first switches that are included in a network.

In addition, the storage medium storing a program stores a program for causing the computer to execute the process of selecting one or more monitoring target switches forming a set of switches, each of which includes either endpoint of any of links constituting the group of links.

Furthermore, the storage medium storing a program stores a program for causing the computer to execute the process of acquiring statistical information from the monitoring target switches.

Note that the program can be recorded in a computer-readable storage medium. The storage medium may be a non-transient medium such as a semiconductor memory, a hard disk, a magnetic recording medium, or an optical recording medium. The present invention can also be embodied in a computer program product.

### [Advantageous Effects of Invention]

According to the aspects of the present invention, there are provided a management apparatus, a network management method, and a storage medium storing a program that contribute to reducing the load caused for acquiring a traffic volume and to knowing an accurate traffic volume.

### [Brief Description of Drawings]

Fig. 1 is an explanatory diagram illustrating an overview of one example embodiment.
Fig. 2 is a block diagram illustrating an example internal configuration of a management apparatus 100.
Fig. 3 is a block diagram illustrating an example internal configuration of a network control unit 105.
Fig. 4 is a flowchart illustrating an example of operations of the management apparatus 100 according to a first example embodiment.
Fig. 5 illustrates an example of connections among switches 301 to 308 and paths connecting among switches 301 to 308.
Fig. 6 illustrates an example of an updated topology.
Fig. 7 illustrates correspondence relations between links and switches used for acquiring statistical information regarding the respective links.
Fig. 8 is a flowchart illustrating an example of operations of the management apparatus 100 according to a second example embodiment.
Fig. 9 illustrates an example of an updated topology.
Fig. 10 illustrates an example of an updated topology.
Fig. 11 illustrates an example of an updated topology.
Fig. 12 illustrates an example of an updated topology.
Fig. 13 illustrates correspondence relations between links and switches used for acquiring statistical information regarding the respective links.

### [Description of Embodiments]

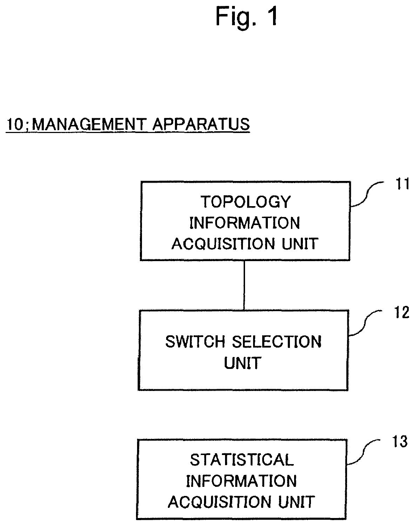

To begin with, an overview of one example embodiment is given below with reference to Fig. 1. Note that drawing reference symbols for the overview are added to respective elements as an example for convenience to aid in understanding, and that descriptions of the overview are not intended for any limitation.

As described above, there is a demand for a management apparatus that contributes to reducing the load caused for acquiring a traffic volume and to knowing an accurate traffic volume.

To meet this demand, a management apparatus 10 illustrated in Fig. 1 is provided as an example. The management apparatus 10 includes a topology information acquisition unit 11, a switch selection unit 12, and a statistical information acquisition unit 13.

The topology information acquisition unit 11 acquires topology information regarding a group of links, each of which has a switch at an endpoint of the link, the switch being included in a group of first switches that are included in a network.

The switch selection unit 12 selects one or more monitoring target switches forming a set of switches, each of which includes either endpoint of one of the links constituting the group of links included in the topology information. The one or more monitoring target switches as selected are switches connected to any of the links within a network composed of a predetermined group of links.

For example, among the links constituting the network, the switch selection unit 12 may select one or more monitoring target switches forming a set of switches, each of which includes at least one of the endpoints of a link. In this case, the selected monitoring target switches are connected to any of the links throughout the network.

It is preferable here that the switch selection unit 12 selects the monitoring target switches so that the total number of selected monitoring target switches is less than the total number of switches included in the group of first switches. In other words, it is preferable that the switch selection unit 12 selects, as the monitoring target switches, some of the first switches.

The statistical information acquisition unit 13 acquires statistical information from the monitoring target switches selected by the switch selection unit 12. In other words, the statistical information acquisition unit 13 acquires statistical information from some of the first switches (that is, the monitoring target switches). Note that "statistical information", as used herein, means statistical information regarding traffic moving along a link.

As a result, the management apparatus 10 contributes to reducing the load caused for acquiring a traffic volume. In addition, as described above, the selected monitoring target switches are connected to any of the links within a network from which statistical information is to be acquired. Therefore, concerning the links from which statistical information is to be acquired, the management apparatus 10 can easily find accurate traffic volumes from the switches connected to the links. Consequently, the management apparatus 10 contributes to reducing the load caused for acquiring a traffic volume and to knowing an accurate traffic volume.

### (First Example Embodiment)

A first example embodiment will now be described in more detail with reference to the drawings.

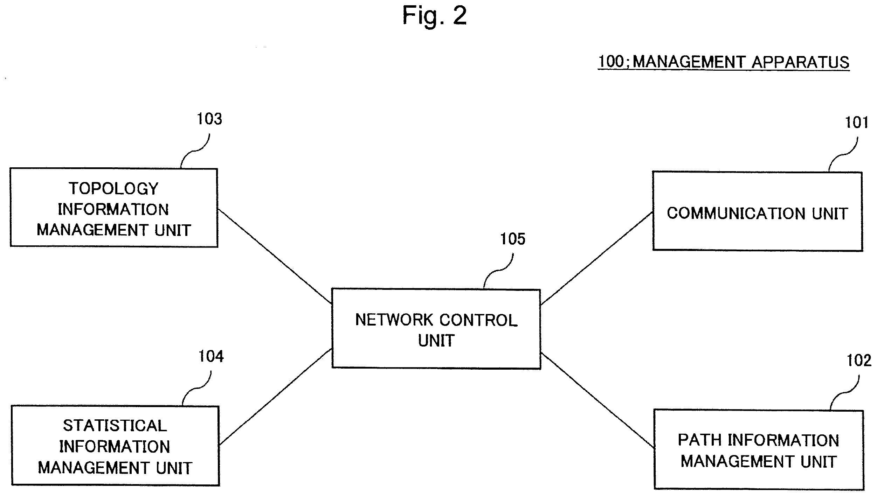

Fig. 2 is a block diagram illustrating an example internal configuration of a management apparatus 100 according to the present example embodiment. The management apparatus 100 is configured to include a communication unit 101, a path information management unit 102, a topology information management unit 103, a statistical information management unit 104, and a network control unit 105.

The communication unit 101 controls communications between individual network nodes and another system. The path information management unit 102 manages path information regarding paths on a network. The topology information management unit 103 manages topology information regarding a network configuration. The statistical information management unit 104 holds statistical information regarding traffic. The network control unit 105 controls the network managed by the management apparatus 100.

The following describes the network control unit 105 in detail.

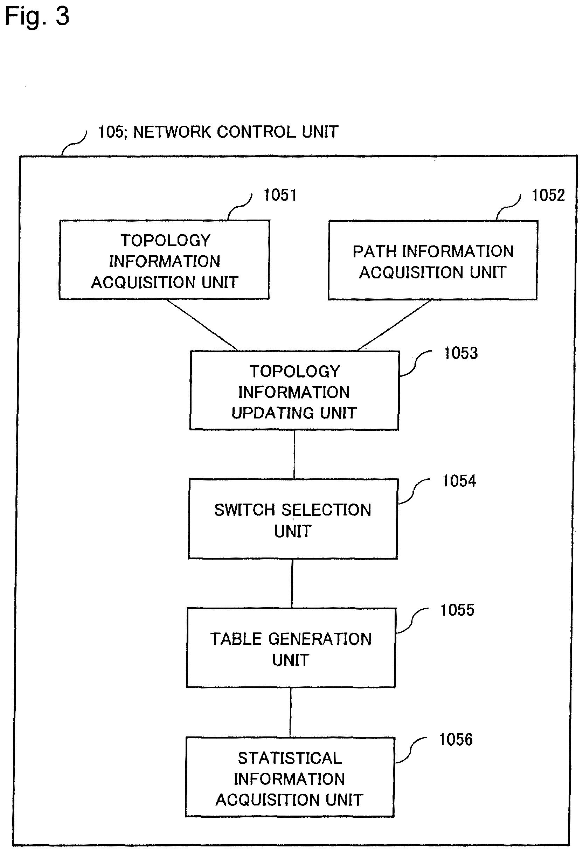

Fig. 3 is a block diagram illustrating an example internal configuration of the network control unit 105. The network control unit 105 is configured to include a topology information acquisition unit 1051, a path information acquisition unit 1052, a topology information updating unit 1053, a switch selection unit 1054, a table generation unit 1055, and a statistical information acquisition unit 1056.

The topology information acquisition unit 1051 identifies topology information regarding the network configuration. Specifically, the topology information acquisition unit 1051 acquires topology information regarding a group of links, each of which has a switch at an endpoint of the link, the switch being included in a group of first switches that are included in the network.

Then, the topology information acquisition unit 1051 identifies one or more switches included in the network (the foregoing group of first switches) and one or more links (the foregoing group of links), each of which has any of the switches at an endpoint of the link.

The path information acquisition unit 1052 acquires path information. Specifically, the path information acquisition unit 1052 acquires path information from the path information management unit 102.

Based on the path information and the topology information, the topology information updating unit 1053 selects one or more second switches satisfying a predetermined condition from the group of first switches, and generates a group of links, each of which has any of the selected second switches at an endpoint of the link. Then, based on the generated group of links, the topology information updating unit 1053 updates the topology information.

The topology information updating unit 1053 performs the update of the topology information so that the number of switches included in the updated topology information (that is, the number of second switches) is less than the number of switches included in the topology information existing prior to the update (that is, the number of switches included in a group of first switches). In other words, the topology information updating unit 1053 updates the topology information so that the number of links included in the updated topology information is less than the number of links included in the topology information existing prior to the update. In short, the topology information updating unit 1053 updates the topology information so that the topology information becomes degenerate; provided, however, the topology information updating unit 1053 updates the topology information so that the network bandwidth is kept unchanged before and after the update of the topology information.

The following describes the aforementioned second switches in detail.

The topology information updating unit 1053 selects any switch that satisfies at least one of the following conditions 1 to 3, as a second switch:

### (Condition 1)

A switch that serves as a contact point between the network configured to include a group of first switches and another network external to the network, and is included in the path information.

### (Condition 2)

A switch that has links with another switch in the group of first switches, the number of links being greater than a predetermined number (three, for example), and is included in the path information.

### (Condition 3)

A switch at which a path is generated or terminated in the group of first switches according to the path information.

The switch selection unit 1054 selects one or more monitoring target switches forming a set of switches, each of which includes either endpoint of one of the links constituting the group of links included in the topology information. The term "monitoring target switches", as used herein, means the switches from which the statistical information acquisition unit 1056 collects statistical information. And, a set of monitoring target switches is equivalent to a set of vertices in vertex cover in a graph composed of a group of links.

In addition, when the topology information updating unit 1053 updates the topology information, the switch selection unit 1054 selects one or more monitoring target switches based on the group of links included in the updated topology information. That is, when the topology information is updated so that the network becomes degenerate, the switch selection unit 1054 selects, based on the degenerate topology information, switches from which statistical information is to be collected.

The table generation unit 1055 generates a table in which a link having a switch included in a group of first switches at an endpoint of the link is associated with a monitoring target switch from which statistical information regarding the link is to be collected.

The statistical information acquisition unit 1056 acquires statistical information from the monitoring target switches. Specifically, when a link about which statistical information is to be collected is specified, the statistical information acquisition unit 1056 refers to the table generated by the table generation unit 1055 to identify the monitoring target switch corresponding to the link. Then, the statistical information acquisition unit 1056 acquires the outgoing traffic volume and the incoming traffic volume at a port on the identified monitoring target switch. Then, based on the acquired outgoing and incoming traffic volumes, the statistical information acquisition unit 1056 calculates statistical information, which is a statistical value representing the traffic volume on a switch.

Operations of the management apparatus 100 according to the present example embodiment will now be described.

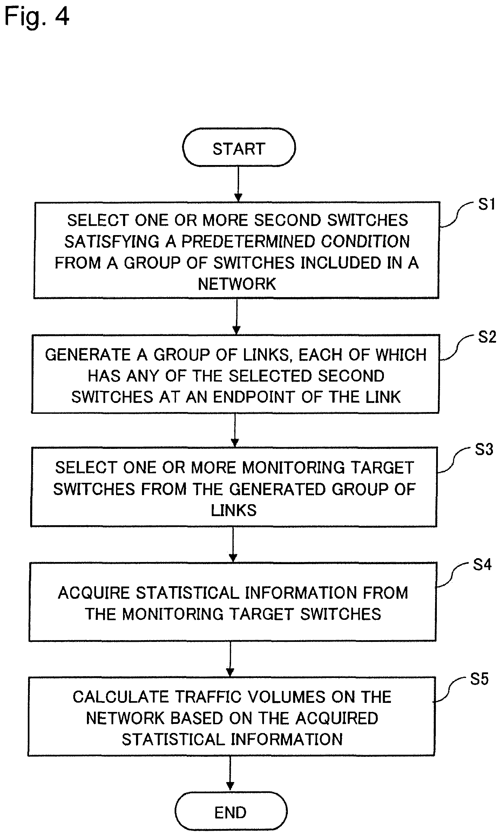

Fig. 4 is a flowchart illustrating an example of operations of the management apparatus 100.

In step S1, the topology information updating unit 1053 selects one or more second switches satisfying a predetermined condition from a group of switches (a group of first switches) included in a network.

Specifically, the topology information acquisition unit 1051 acquires path information regarding the network from the path information management unit 102. In addition, the topology information acquisition unit 1051 acquires topology information regarding the network from the topology information management unit 103. Then, based on the topology information, the topology information acquisition unit 1051 identifies the group of first switches. In addition, the topology information acquisition unit 1051 identifies one or more links, each of which has a switch at an endpoint of the link, the switch being included in the identified group of first switches. Then, the topology information updating unit 1053 selects any switch that satisfies at least one of the above-described conditions 1 to 3, as a second switch.

In step S2, the topology information updating unit 1053 generates a group of links, each of which has any of the selected second switches at an endpoint of the link.

In step S3, the switch selection unit 1054 selects one or more monitoring target switches from the generated group of links. Next, the table generation unit 1055 generates a table in which a link having a switch included in the group of first switches at an endpoint of the link is associated with a monitoring target switch from which statistical information regarding the link is to be collected.

In step S4, the statistical information acquisition unit 1056 acquires statistical information from the monitoring target switches.

In step S5, the statistical information acquisition unit 1056 calculates traffic volumes on the network, based on the acquired statistical information. Then, the statistical information acquisition unit 1056 stores the acquired statistical information into the statistical information management unit 104. The management apparatus 100 repeats the processes in steps S4 and S5 to accumulate statistical information.

The following describes in detail an example of the process of selecting monitoring target switches with reference to the drawings.

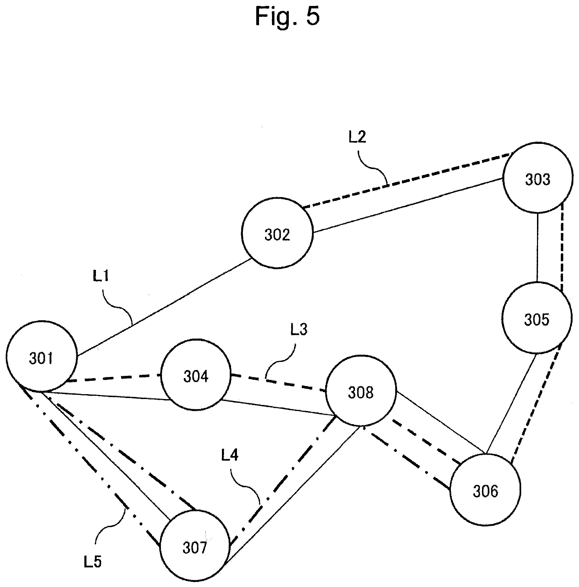

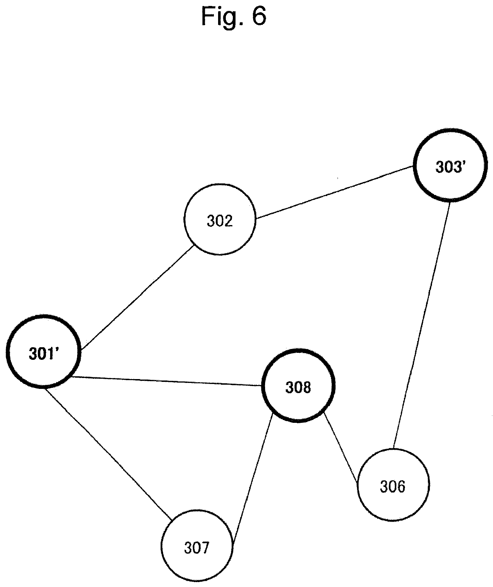

Fig. 5 illustrates an example of connections among switches 301 to 308 and paths connecting the switches 301 to 308. In Fig. 5, each circle represents a communication device (switch). In addition, in Fig. 5, the number in each circle represents a reference symbol identifying a switch for illustrative purposes. Furthermore, switches 301 to 308 in Fig. 5 correspond to the above-mentioned first switches. The same applies to Fig. 6 and Figs. 9 to 12.

Fig. 5 shows path L1 (solid line in Fig. 5), path L2 (dotted line in Fig. 5), path L3 (dashed line in Fig. 5), path L4 (dot-dash line in Fig. 5), and path L5 (dot-dot-dash line in Fig. 5). More specifically, paths L1 to L5 in Fig. 5 are configured to include links having the following switches at the respective endpoints of the links:
Path L1: switch 301 - switch 302, switch 302 - switch 303, switch 303 - switch 305, switch 305 - switch 306, switch 306 - switch 308, switch 308 - switch 304, switch 304 - switch 301, switch 301 - switch 307, and switch 307 - switch 308
Path L2: switch 302 - switch 303, switch 303 - switch 305, and switch 305 - switch 306
Path L3: switch 301 - switch 304, switch 304 - switch 308, and switch 308 - switch 306
Path L4: switch 301 - switch 307, switch 307 - switch 308, and switch 308 - switch 306
Path L5: switch 301 - switch 307

For the network illustrated in Fig. 5, in this example, the topology information management unit 103 stores relations of connection among switches 301 to 308. In addition, the path information management unit 102 stores information regarding paths L1 to L5.

In this case, the topology information acquisition unit 1051 refers to the topology information management unit 103 to acquire the relations of connection among switches 301 to 308. In addition, the path information acquisition unit 1052 refers to the path information management unit 102 to acquire information regarding paths L1 to L5. Then, the topology information updating unit 1053 selects second switches satisfying the above-described conditions 1 to 3 from switches 301 to 308 illustrated in Fig. 5.

It is assumed here that, as the second condition, the topology information updating unit 1053 selects as the second switch having links to another switch in the group of first switches, the number of links being greater than three. In this case, the topology information updating unit 1053 selects as the second switches satisfying at least one of the foregoing conditions 1 to 3, namely, switch 301, switch 302, switch 303, switch 306, switch 307, and switch 308. Then, the topology information updating unit 1053 generates a group of links, each of which has a second switch at an endpoint of the link, and updates the topology information based on the generated group of links. Specifically, the topology information updating unit 1053 generates a group of links that include the switches illustrated in Fig. 6.

Fig. 6 illustrates an example of the updated group of links generated by the topology information updating unit 1053. In the group of links illustrated in Fig. 6, switch 304 and switch 305 in Fig. 5 are included in switch 301 and switch 303, respectively, which are now called switch 301' and switch 303', respectively. As a result, the topology information updating unit 1053 generates the following group of links as illustrated in Fig. 6.

Generated group of links: switch 301' - switch 302, switch 302 - switch 303', switch 303' - switch 306, switch 306 - switch 308, switch 308 - switch 301', switch 308 - switch 307, and switch 307 - switch 301'

It is assumed here that the switch selection unit 1054 selects, from the updated group of links generated by the topology information updating unit 1053, one or more monitoring target switches that each include at least one endpoint of any of the links. By way of example, the following description assumes that the switch selection unit 1054 selects switch 301', switch 303', and switch 308 as the monitoring target switches.

In this case, the statistical information acquisition unit 1056 acquires statistical information regarding the following links that correspond to the monitoring target switches (switch 301', switch 303', and switch 308):
- Switch 301': switch 301' - switch 302, switch 301' - switch 307, and switch 301' - switch 308
- Switch 303': switch 303' - switch 302 and switch 303' - switch 306
- Switch 308: switch 308 - switch 301', switch 308 - switch 306, and switch 308 - switch 307

Note that, when statistical information can be acquired from either of two switches, as seen in the link between switches 301' and 308, the statistical information acquisition unit 1056 need only acquire statistical information from either one of the switches (either switch 301' or switch 308, for example). Consequently, the statistical information acquisition unit 1056 acquires statistical information regarding all the links included in the degenerate topology information.

It is further assumed here that the statistical information acquisition unit 1056 is going to acquire statistical information regarding the traffic along links that are not included in the second switches. That is, with reference to Fig. 5 illustrating switches 301 to 308, it is assumed here that the statistical information acquisition unit 1056 is going to acquire statistical information regarding the traffic along the following links:
- Switch 301 - switch 304
- Switch 304 - switch 308
- Switch 303 - switch 305
- Switch 305 - switch 306

In this case, the statistical information acquisition unit 1056 may use the statistical information regarding the link between switch 301' and switch 308 as the statistical information regarding the links between switch 301 and switch 304 and between switch 304 and switch 308. Likewise, the statistical information acquisition unit 1056 may use the statistical information regarding the link between switch 303' and switch 306 as the statistical information regarding the links between switch 303 and switch 305 and between switch 305 and switch 306.

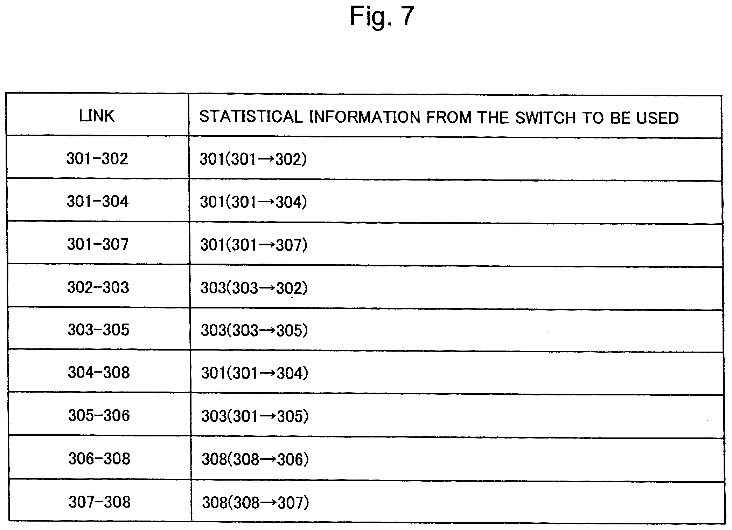

Fig. 7 shows correspondence relations between the links in Fig. 5 and the switches used for acquiring statistical information regarding the respective links. Concerning the network illustrated in Fig. 5, the switches used for acquiring statistical information regarding the links are switch 301, switch 303, and switch 308, as seen in Fig. 7. In short, the statistical information acquisition unit 1056 collects statistical information from the selected monitoring target switches, and consequently the management apparatus 100 can recognize statistical information regarding traffic along every link in the network.

As described above, the management apparatus 100 according to the present example embodiment selects (narrows down to) switches from which statistical information is to be acquired, from the switches included in a network. Furthermore, the management apparatus 100 according to the present example embodiment selects a switch connected to any link included in the network, as the switch from which statistical information is to be acquired. Consequently, the management apparatus 100 according to the present example embodiment contributes to reducing the load caused for acquiring a traffic volume and to knowing an accurate traffic volume.

### (Second Example Embodiment)

A second example embodiment will now be described in more detail with reference to the drawings.

In the present example embodiment, two or more sets of monitoring target switches are created. Note that descriptions of the present example embodiment in common with those of the above-described example embodiment are omitted. In addition, in the description of the present example embodiment, reference symbols identical to those of the foregoing example embodiment are given to components identical to those of the foregoing example embodiment, and descriptions of these components are omitted. Furthermore, operational effects identical to those provided by the foregoing example embodiment are also omitted in the descriptions of the present example embodiment.

The internal configuration of the management apparatus 100 is the same as that illustrated in Fig. 2. The internal configuration of the network control unit 105 is also the same as that illustrated in Fig. 3. The following describes differences from the first example embodiment in detail.

The switch selection unit 1054 according to the present example embodiment creates two or more sets of monitoring target switches. Then, every time statistical information is acquired, the statistical information acquisition unit 1056 according to the present example embodiment selects a set of monitoring target switches, and selects a switch included in the selected set of monitoring target switches as the monitoring target switch. Then, the statistical information acquisition unit 1056 acquires statistical information from the selected monitoring target switch.

Additionally, the statistical information acquisition unit 1056 according to the present example embodiment may calculate a frequency of acquiring statistical information for every switch at an endpoint of a link included in the updated group of links generated by the topology information updating unit 1053. In this case, the statistical information acquisition unit 1056 selects a set of monitoring target switches in accordance with the frequency of acquisition calculated for every switch. The statistical information acquisition unit 1056 then selects a switch included in the selected set of monitoring target switches, as the monitoring target switch. Then, the statistical information acquisition unit 1056 acquires statistical information from the selected monitoring target switch.

Operations of the management apparatus 100 according to the present example embodiment will now be described.

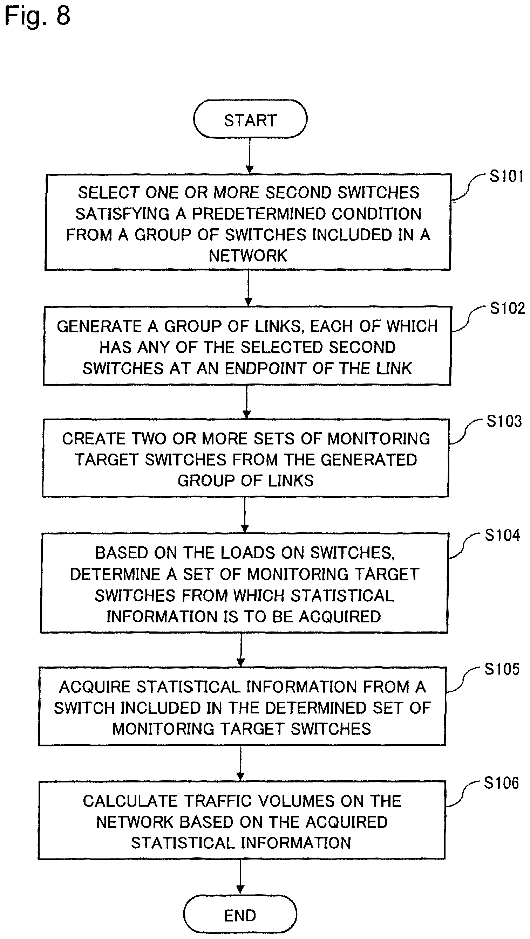

Fig. 8 is a flowchart illustrating an example of operations of the management apparatus 100 according to the present example embodiment. Note that steps S101 and S102 in Fig. 8 are the same as steps S1 and S2 in Fig. 4, thus their detailed descriptions are omitted.

In step S103, the switch selection unit 1054 creates two or more sets of monitoring target switches.

In step S104, the switch selection unit 1054 determines, based on the loads on switches, a specific set of monitoring target switches from which statistical information is to be acquired.

In step S105, the statistical information acquisition unit 1056 acquires statistical information from a switch included in the determined set of monitoring target switches.

In step S106, information about traffic on the network is created based on the acquired statistical information.

The following describes in detail an example embodiment of the process of selecting monitoring target switches with reference to the drawings.

To begin with, suppose that the topology information updating unit 1053 has selected second switches as described above, namely switches 301, 302, 303, 306, 307, and 308 from switches 301 to 308 on paths L1 to L5 illustrated in Fig. 5.

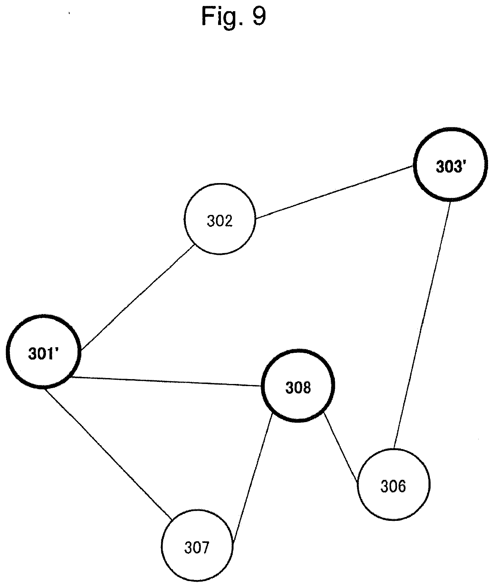

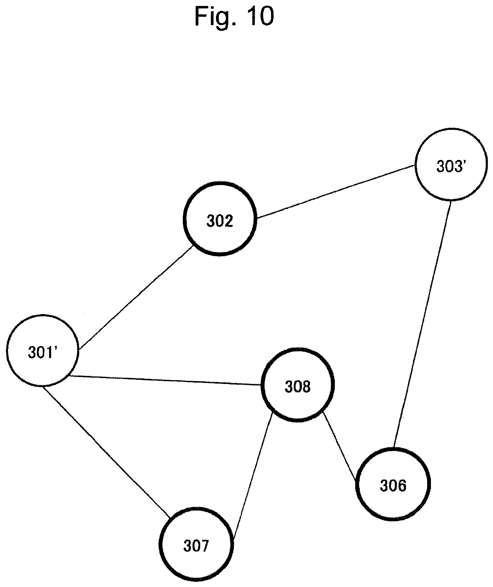

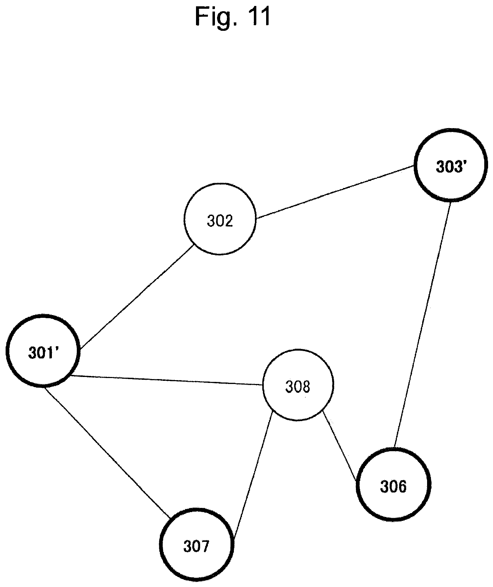

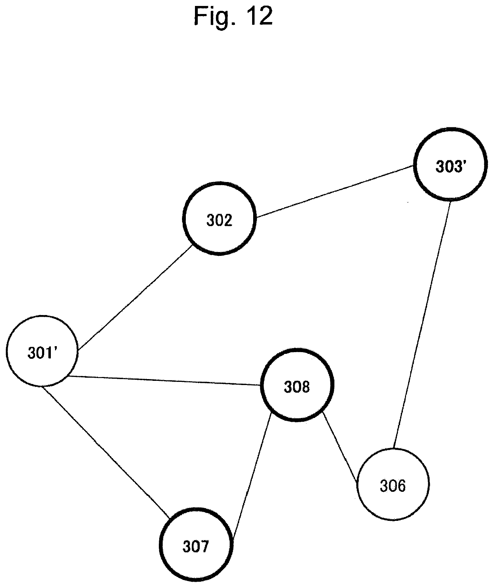

Also suppose that the switch selection unit 1054 according to the present example embodiment creates the sets of switches 1 to 4 listed below, as sets of monitoring target switches (each set of monitoring target switches is hereinafter called a "switches set"). Figs. 9 to 12 identify monitoring target switches belonging to switches sets 1 to 4, respectively. In Figs. 9 to 12, the switches in thick lines represent monitoring target switches constituting a switches set.
Switches set 1 (see Fig. 9): switch 301', switch 303', and switch 308
Switches set 2 (see Fig. 10): switch 302, switch 306, switch 307, and switch 308
Switches set 3 (see Fig. 11): switch 301', switch 303', switch 306, and switch 307
Switches set 4 (see Fig. 12): switch 302, switch 303', switch 307, and switch 308

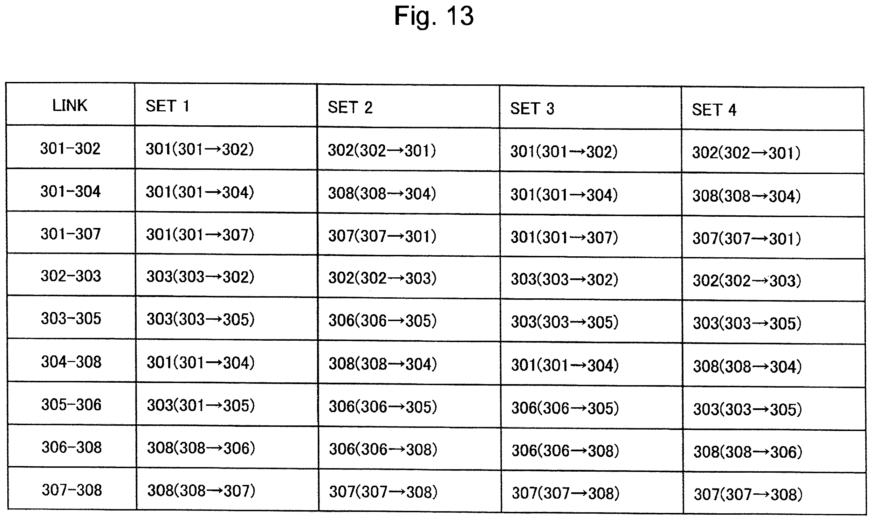

Further, Fig. 13 shows, for every switches set, correspondence relations between the links in Fig. 5 and the switches used for acquiring statistical information regarding the respective links. When the switch selection unit 1054 creates a switches set, the table generation unit 1055 may create a table as illustrated in Fig. 13. That is, the table generation unit 1055 may generate, for every switches set, a table in which a link having a switch included in the set at an endpoint of the link is associated with a monitoring target switch from which statistical information regarding the link is to be acquired. The management apparatus 100 can efficiently determine a switch from which statistical information is to be acquired, by generating and storing a table as illustrated in Fig. 13.

Then, the switch selection unit 1054 selects a switches set every time statistical information is acquired. Then, the switch selection unit 1054 selects a monitoring target switch from the selected switches set. Next, the statistical information acquisition unit 1056 refers to the table generated by the table generation unit 1055, and, according to the link for which statistical information is to be acquired, determines the switch from which statistical information is to be acquired.

For example, when acquiring statistical information for the first time, the statistical information acquisition unit 1056 acquires statistical information using the aforementioned switches set 1. Subsequently, when acquiring statistical information next time, the statistical information acquisition unit 1056 may acquire statistical information using the aforementioned switches set 1.

Referring now to the table in Fig. 13, concerning the link between switches 301 and 307, for example, the switch from which statistical information is acquired depends on the switches set. Specifically, concerning switches sets 1 and 3, the switch which corresponds to the link between switches 301 and 307 and from which statistical information is to be acquired is switch 301. Concerning switches sets 2 and 4, the switch which corresponds to the link between switches 301 and 307 and from which statistical information is to be acquired is switch 307.

Hence, the switch selection unit 1054 may count the number of acquisitions of statistical information with respect to each switch. Then, the statistical information acquisition unit 1056 may adjust statistical values representing traffic volumes in accordance with the number of acquisitions of statistical information with respect to each switch.

Alternatively, the switch selection unit 1054 may calculate the frequency of acquisition of statistical information with respect to each switch, and select a switches set in accordance with the frequency of acquisition with respect to each switch. Then, the switch selection unit 1054 may select a monitoring target switch from the selected switches set.

Alternatively, the management apparatus 100 may acquire loads on individual switches. Then, the switch selection unit 1054 may select a switches set in accordance with the loads on switches. By way of example, suppose the case where the load on switch 303 has increased. In this case, the switch selection unit 1054 may select switches set 2, which does not include switch 303. As a result, the management apparatus 100 can reduce the load on switch 303.

As described above, the management apparatus 100 according to the present example embodiment creates two or more sets of monitoring target switches. Thus, the management apparatus 100 according to the present example embodiment can prevent an increase in access to a particular switch (that is, the process of acquiring statistical information) by changing to another switch from which statistical information is to be acquired, according to the situation. As a result, the management apparatus 100 according to the present example embodiment further contributes to reducing the load caused for acquiring a traffic volume and to knowing an accurate traffic volume.

The whole or part of the example embodiments disclosed above can be described as, but not limited to, the following supplementary notes.
(Supplementary note 1) The management apparatus according to the first aspect described above.
(Supplementary note 2) The management apparatus according to supplementary note 1, further comprising:
   a path information acquisition unit that acquires path information; and
   topology information updating unit that selects, based on the path information and the topology information, one or more second switches satisfying a predetermined condition from the group of first switches, generates a group of links, each of which has any of the selected second switches at an endpoint of the link, and updates the topology information based on the generated group of links,
   wherein the switch selection unit selects the one or more monitoring target switches based on the group of links generated by the topology information updating unit.
(Supplementary note 3) The management apparatus according to supplementary note 2,
   wherein the topology information updating unit selects, as any of the second switches, a switch that serves as a contact point between a network configured to include the group of first switches and another network external to the network, and is included in the path information.
(Supplementary note 4) The management apparatus according to supplementary note 2 or 3,
   wherein the topology information updating unit selects, as any of the second switches, a switch that has a number of links with another switch in the group of first switches, and is included in the path information, the number being greater than a predetermined number.
(Supplementary note 5) The management apparatus according to any one of supplementary notes 2 to 4,
   wherein the topology information updating unit selects, as any of the second switches, and based on the path information, a switch at which a path is generated or terminated in the group of first switches.
(Supplementary note 6) The management apparatus according to any one of supplementary notes 1 to 5, further comprising:
   a table generation unit that generates a table in which a link having a switch included in the group of first switches at an endpoint of the link is associated with any of the monitoring target switches from which statistical information regarding the link is collected.
(Supplementary note 7) The management apparatus according to any one of supplementary notes 1 to 6,
   wherein the switch selection unit creates two or more sets of the monitoring target switches, and, every time the statistical information is acquired, selects one of the sets and selects the monitoring target switches from the selected set.
(Supplementary note 8) The management apparatus according to supplementary note 7,
   wherein the switch selection unit creates two or more sets of the monitoring target switches, calculates a frequency of acquisition of statistical information with respect to each switch at an endpoint of a link included in the group of links, selects one of the sets based on the frequency of acquisition with respect to each switch, and selects the monitoring target switches from the selected set.
(Supplementary note 9) The management apparatus according to supplementary note 7 or 8, wherein the table generation unit generates, for each of the sets, a table in which a link having a switch included in the set at an endpoint of the link is associated with the monitoring target switch from which statistical information regarding the link is acquired.
(Supplementary note 10) The network management method according to the second aspect described above.
(Supplementary note 11) The program according to the third aspect described above.

Note that the embodiments described in supplementary notes 10 and 11 can be turned into the embodiments described in supplementary notes 2 to 9 as with the embodiment described in supplementary note 1.

The disclosures of the patent and non-patent literatures described above are incorporated herein by reference. Modifications and adjustments of example embodiments may be made within the bounds of the entire disclosure (including the scope of the claims) of the present invention, and also based on fundamental technological concepts thereof. Furthermore, various combinations and selections of various disclosed elements (including respective elements of the respective claims, respective elements of the respective example embodiments, respective elements of the respective drawings, and the like) are possible within the bounds of the entire disclosure of the present invention. That is, the present invention clearly includes every type of transformation and modification that those skilled in the art can achieve according to the entire disclosure of the present invention including the claims and to technological concepts thereof. In particular, it should be understood that a range of values appearing herein includes any value and sub-range falling in the range as if they are specifically set forth herein unless otherwise stated.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

This application is based upon and claims the benefit of priority from Japanese patent application No. 2015-051223, filed on March 13, 2015.

### [Reference signs List]

- 10, 100: Management apparatus
- 11, 1051: Topology information acquisition unit
- 12, 1054: Switch selection unit
- 13, 1056: Statistical information acquisition unit
- 101: Communication unit
- 102: Path information management unit
- 103: Topology information management unit
- 104: Statistical information management unit
- 105: Network control unit
- 301 to 308: Switch
- 1052: Path information acquisition unit
- 1053: Topology information updating unit
- 1055: Table generation unit
- L1 to L5: Path

## Claims

1. A network management apparatus (100) comprising:
switch selection means (1054) that is configured to select, based on topology information regarding a group of links forming a set of links, each of which has at an endpoint of the link a switch that is included in a group of first switches included in a network, at least one monitoring target switches forming a set of switches, each of which includes either endpoint of any of the links;
statistical information acquisition means (1056) that is configured to acquire statistical information from the monitoring target switches;
path information acquisition means (1052) that is configured to acquire path information; and
topology information updating means (1053) that is configured to select, based on the path information and the topology information, at least one second switches satisfying a predetermined condition from the group of first switches, to generate a group of links, each of which has any of the selected second switches at an endpoint of the link, and to update the topology information based on the generated group of links,
wherein the switch selection means (1054) is configured to select the at least one monitoring target switches based on the group of links generated by the topology information updating means (1053), and
the topology information updating means (1053) is configured to update the topology information so that the topology information becomes degenerated and bandwidth in the network is kept unchanged before and after the update.

2. The network management apparatus (100) according to claim 1, comprising: topology information acquisition means (1051) that is configured to acquire the topology information.

3. The network management apparatus (105) according to claim 1, wherein the topology information updating means (1053) is configured to select, as any of the second switches, a switch that serves as a contact point between a network configured to include the group of first switches and another network external to the network, and is included in the path information.

4. The network management apparatus (105) according to claim 1 or 3, wherein the topology information updating means (1053) is configured to select, as any of the second switches, a switch that has a number of links with another switch in the group of first switches, and is included in the path information, the number being greater than a predetermined number.

5. The network management apparatus (100) according to any one of claims 1, 3 and 4,
wherein the topology information updating means (1053) is configured to select, as any of the second switches, and based on the path information, a switch at which a path is generated or terminated in the group of first switches.

6. The network management apparatus (100) according to any one of claims 1 to 5,
further comprising:
table generation means (1055) that is configured to generate a table in which a link having a switch included in the group of first switches at an endpoint of the link is associated with any of the monitoring target switches from which statistical information regarding the link is collected.

7. The network management apparatus (100) according to any one of claims 1 to 6,
wherein the switch selection means (1054) is configured to create two or more sets of the monitoring target switches, and, every time the statistical information is acquired, to select one of the sets and selects the monitoring target switches from the selected set.

8. The network management apparatus (100) according to claim 7, wherein the switch selection means (1054) is configured to create two or more sets of the monitoring target switches, to calculate a frequency of acquisition of statistical information with respect to each switch at an endpoint of a link included in the group of links, to select one of the sets based on the frequency of acquisition with respect to each switch, and to select the monitoring target switches from the selected set.

9. A network management method comprising:
selecting, based on topology information regarding a group of links forming a set of links, each of which has at an endpoint of the link a switch that is included in a group of first switches included in a network, at least one monitoring target switches forming a set of switches, each of which includes either endpoint of any of the links;
acquiring statistical information from the monitoring target switches;
acquiring path information;
selecting, based on the path information and the topology information, at least one second switches satisfying a predetermined condition from the group of first switches;
generating a group of links, each of which has any of the selected second switches at an endpoint of the link; and
updating the topology information based on the generated group of links;
wherein the at least one monitoring target switches are selected based on the group of links, and
the topology information is updated so that the topology information becomes degenerated and bandwidth in the network is kept unchanged before and after the update.

10. The network management method according to claim 9, comprising acquiring the topology information.

11. A program that causes a computer controlling a network management apparatus connected to a group of first switches to execute the processes of:
selecting, based on topology information regarding a group of links forming a set of links, each of which has at an endpoint of the link a switch that is included in the group of first switches included in a network, at least one monitoring target switches forming a set of switches, each of which includes either endpoint of any of links constituting the group of links;
acquiring statistical information from the monitoring target switches;
acquiring path information;
selecting, based on the path information and the topology information, at least one second switches satisfying a predetermined condition from the group of first switches;
generating a group of links, each of which has any of the selected second switches at an endpoint of the link; and
updating the topology information based on the generated group of links;
wherein the at least one monitoring target switches are selected based on the group of links, and
the topology information is updated so that the topology information becomes degenerated and bandwidth in the network is kept unchanged before and after the update.

12. The program according to claim 11, the program comprising the process of acquiring the topology information.

## Patentansprüche

1. Netzwerkverwaltungsvorrichtung (100), die aufweist:
ein Switch-Auswahlmittel (1054), das konfiguriert ist, beruhend auf Topologieinformationen hinsichtlich einer Gruppe von Verbindungen, die einen Satz von Verbindungen bilden, von denen jede an einem Endpunkt der Verbindung einen Switch aufweist, der in einer Gruppe von ersten Switches enthalten ist, die in einem Netzwerk enthalten sind, mindestens einen von Überwachungsziel-Switches auszuwählen, die einen Satz von Switches bilden, von denen jeder einen Endpunkt von irgendeiner der Verbindungen enthält;
ein Mittel (1056) zur Erfassung von statistischen Informationen, das konfiguriert ist, statistische Informationen von den Überwachungsziel-Switches zu erfassen;
ein Mittel (1052) zur Erfassung von Pfadinformationen, das konfiguriert ist, Pfadinformationen zu erfassen; und
ein Mittel (1053) zur Aktualisierung von Topologieinformationen, das konfiguriert ist, beruhend auf den Pfadinformationen und den Topologieinformationen mindestens einen von zweiten Switches, die eine vorgegebene Bedingung erfüllen, aus der Gruppe der ersten Switches auszuwählen, um eine Gruppe von Verbindungen zu erzeugen, von denen jede irgendeinen der ausgewählten zweiten Switches an einem Endpunkt der Verbindung aufweist, und die Topologieinformationen beruhend auf der erzeugten Gruppe von Verbindungen zu aktualisieren,
wobei das Switch-Auswahlmittel (1054) konfiguriert ist, den mindestens einen aus den Überwachungsziel-Switches beruhend auf der Gruppe der durch das Mittel (1053) zur Aktualisierung von Topologieinformationen erzeugten Verbindungen auszuwählen, und das Mittel (1053) zur Aktualisierung von Topologieinformationen konfiguriert ist, die Topologieinformationen so zu aktualisieren, dass die Topologieinformationen entartet werden und die Bandbreite im Netzwerk vor und nach der Aktualisierung unverändert gelassen wird.

2. Netzwerkverwaltungsvorrichtung (100) nach Anspruch 1, die aufweist:
ein Mittel (1051) zur Erfassung von Topologieinformationen, das konfiguriert ist, die Topologieinformationen zu erfassen.

3. Netzwerkverwaltungsvorrichtung (105) nach Anspruch 1,
wobei das Mittel (1053) zur Aktualisierung von Topologieinformationen konfiguriert ist, als irgendeinen der zweiten Switches einen Switch auszuwählen, der als ein Kontaktpunkt zwischen einem Netzwerk, das konfiguriert ist, die Gruppe der ersten Switches zu enthalten, und einem anderen Netzwerk außerhalb des Netzwerks dient, und in den Pfadinformationen enthalten ist.

4. Netzwerkverwaltungsvorrichtung (105) nach Anspruch 1 oder 3,
wobei das Mittel (1053) zur Aktualisierung von Topologieinformationen konfiguriert ist, als irgendeinen der zweiten Switches einen Switch auszuwählen, der eine Anzahl von Verbindungen mit einem anderen Switch in der Gruppe von ersten Switches aufweist, und in den Pfadinformationen enthalten ist, wobei die Anzahl größer als eine vorgegebene Anzahl ist.

5. Netzwerkverwaltungsvorrichtung (100) nach einem der Ansprüche 1, 3 und 4,
wobei das Mittel (1053) zur Aktualisierung von Topologieinformationen konfiguriert ist, als irgendeinen der zweiten Switches, und beruhend auf den Pfadinformationen, einen Switch auszuwählen, an dem ein Pfad in der Gruppe der ersten Switches erzeugt oder beendet wird.

6. Netzwerkverwaltungsvorrichtung (100) nach einem der Ansprüche 1 bis 5, die ferner aufweist:
ein Tabellenerzeugungsmittel (1055), das konfiguriert ist, eine Tabelle zu erzeugen, in der eine Verbindung, die einen Switch, der in der Gruppe von ersten Switches enthalten ist, an einem Endpunkt der Verbindung aufweist, mit irgendeinem der Überwachungsziel-Switches verknüpft ist, von denen statistische Informationen hinsichtlich der Verbindung gesammelt werden.

7. Netzwerkverwaltungsvorrichtung (100) nach einem der Ansprüche 1 bis 6,
wobei das Switch-Auswahlmittel (1054) konfiguriert ist, zwei oder mehr Sätze der Überwachungsziel-Switches zu erzeugen, und jedes Mal, wenn statistische Informationen erfasst werden, einen der Sätze auszuwählen und die Überwachungsziel-Switches aus dem ausgewählten Satz auszuwählen.

8. Netzwerkverwaltungsvorrichtung (100) nach Anspruch 7,
wobei das Switch-Auswahlmittel (1054) konfiguriert ist, zwei oder mehr Sätze der Überwachungsziel-Switches zu erzeugen, eine Häufigkeit der Erfassung statistischer Informationen bezüglich jedes Switches an einem Endpunkt einer Verbindung zu berechnen, die in der Gruppe der Verbindungen enthalten ist, einen der Sätze beruhend auf der Häufigkeit der Erfassung bezüglich jedes Switches auszuwählen und die Überwachungsziel-Switches aus dem ausgewählten Satz auszuwählen.

9. Netzwerkverwaltungsverfahren, das aufweist:
Auswählen, beruhend auf Topologieinformationen hinsichtlich einer Gruppe von Verbindungen, die einen Satz von Verbindungen bilden, von denen jede an einem Endpunkt der Verbindung einen Switch aufweist, der in einer Gruppe von ersten Switches enthalten ist, die in einem Netzwerk enthalten sind, mindestens einen von Überwachungsziel-Switches, die einen Satz von Switches bilden, von denen jeder einen Endpunkt von irgendeiner der Verbindungen enthält;
Erfassen von statistischen Informationen von den Überwachungsziel-Switches;
Erfassen von Pfadinformationen;
Auswählen, beruhend auf den Pfadinformationen und den Topologieinformationen, mindestens einen von zweiten Switches, die eine vorgegebene Bedingung erfüllen, aus der Gruppe der ersten Switches;
Erzeugen einer Gruppe von Verbindungen, von denen jede irgendeinen der ausgewählten zweiten Switches an einem Endpunkt der Verbindung aufweist; und Aktualisieren der Topologieinformationen beruhend auf der erzeugten Gruppe von Verbindungen;
wobei der mindestens eine von Überwachungsziel-Switches beruhend auf der Gruppe der Verbindungen ausgewählt wird, und
die Topologieinformationen so aktualisiert werden, dass die Topologieinformationen entartet werden und die Bandbreite im Netzwerk vor und nach der Aktualisierung unverändert gelassen wird.

10. Netzwerkverwaltungsverfahren nach Anspruch 9, das das Erfassen der Topologieinformationen aufweist.

11. Programm, das einen Computer veranlasst, der eine Netzwerkverwaltungsvorrichtung steuert, die mit einer Gruppe von ersten Switches verbunden ist, die Prozesse auszuführen:
Auswählen, beruhend auf Topologieinformationen hinsichtlich einer Gruppe von Verbindungen, die einen Satz von Verbindungen bilden, von denen jede an einem Endpunkt der Verbindung einen Switch aufweist, der in der Gruppe von ersten Switches enthalten ist, die in einem Netzwerk enthalten sind, mindestens einen von Überwachungsziel-Switches, die einen Satz von Switches bilden, von denen jeder einen Endpunkt von irgendeiner der Verbindungen enthält, die die Gruppe der Verbindungen bilden;
Erfassen von statistischen Informationen von den Überwachungsziel-Switches;
Erfassen von Pfadinformationen;
Auswählen, beruhend auf den Pfadinformationen und den Topologieinformationen, mindestens einen von zweiten Switches, die eine vorgegebene Bedingung erfüllen, aus der Gruppe der ersten Switches;
Erzeugen einer Gruppe von Verbindungen, von denen jede irgendeinen der ausgewählten zweiten Switches an einem Endpunkt der Verbindung aufweist; und Aktualisieren der Topologieinformationen beruhend auf der erzeugten Gruppe von Verbindungen;
wobei der mindestens eine der Überwachungsziel-Switches beruhend auf der Gruppe der Verbindungen ausgewählt wird, und
die Topologieinformationen so aktualisiert werden, dass die Topologieinformationen entartet werden und die Bandbreite im Netzwerk vor und nach der Aktualisierung unverändert gelassen wird.

12. Programm nach Anspruch 11, wobei das Programm den Prozess zum Erfassen der Topologieinformationen aufweist.

## Revendications

1. Dispositif de gestion de réseau (100), comprenant :
une unité de sélection de commutateur (1054) prévue pour sélectionner, sur la base d'informations de topologie relatives à un groupe de liaisons formant un ensemble de liaisons dont chacune présente, à une extrémité de la liaison, un commutateur inclus dans un groupe de premiers commutateurs compris dans un réseau, au moins un commutateur cible de surveillance formant un ensemble de commutateurs, dont chacun comprend l'une ou l'autre extrémité de chaque liaison ;
une unité d'acquisition d'informations statistiques (1056) prévue pour acquérir des informations statistiques des commutateurs cibles de surveillance ;
une unité d'acquisition d'informations de trajet (1052) prévue pour acquérir des informations de trajet ; et
une unité de mise à jour d'informations de topologie (1053) prévue pour sélectionner, sur la base des informations de trajet et des informations de topologie, au moins un deuxième commutateur satisfaisant à une condition définie dans le groupe de premiers commutateurs, afin de générer un groupe de liaisons, dont chacune présente l'un quelconque des deuxièmes commutateurs à une extrémité de la liaison, et de mettre à jour les informations de topologie sur la base du groupe de liaisons généré,
où l'unité de sélection de commutateur (1054) est prévue pour sélectionner ledit au moins un commutateur cible de surveillance sur la base du groupe de liaisons généré par l'unité de mise à jour d'informations de topologie (1053), et
l'unité de mise à jour d'informations de topologie (1053) est prévue pour mettre à jour les informations de topologie de telle manière que les informations de topologie dégénèrent et que la bande passante dans le réseau demeure inchangée avant et après la mise à jour.

2. Dispositif de gestion de réseau (100) selon la revendication 1, comprenant : une unité d'acquisition d'informations de topologie (1051) prévue pour acquérir les informations de topologie.

3. Dispositif de gestion de réseau (105) selon la revendication 1,
où l'unité de mise à jour d'informations de topologie (1053) est prévue pour sélectionner en tant que deuxième commutateur quelconque, un commutateur servant de point de contact entre un réseau prévu pour inclure le groupe de premiers commutateurs et un autre réseau extérieur au réseau, et compris dans les informations de trajet.

4. Dispositif de gestion de réseau (105) selon la revendication 1 ou la revendication 3,
où l'unité de mise à jour d'informations de topologie (1053) est prévue pour sélectionner en tant que deuxième commutateur quelconque, un commutateur ayant un nombre de liaisons avec un autre commutateur dans le groupe de premiers commutateurs, et compris dans les informations de trajet, le nombre étant supérieur à un nombre défini.

5. Dispositif de gestion de réseau (100) selon l'une des revendications 1, 3 et 4,
où l'unité de mise à jour d'informations de topologie (1053) est prévue pour sélectionner en tant que deuxième commutateur quelconque, et sur la base des informations de trajet, un commutateur où un trajet est généré ou achevé dans le groupe de premiers commutateurs.

6. Dispositif de gestion de réseau (100) selon l'une des revendications 1 à 5, comprenant en outre :
une unité de génération de table (1055) prévue pour générer une table où une liaison ayant un commutateur compris dans le groupe de premiers commutateurs à une extrémité de la liaison est associé à l'un quelconque des commutateurs cibles de surveillance dont des informations statistiques relatives à la liaison sont recueillies.

7. Dispositif de gestion de réseau (100) selon l'une des revendications 1 à 6,
où l'unité de sélection de commutateur (1054) est prévue pour créer deux ou plusieurs ensembles de commutateurs cibles de surveillance, et, chaque fois que les informations statistiques sont acquises, pour sélectionner un des ensembles et sélectionner les commutateurs cibles de surveillance dans l'ensemble sélectionné.

8. Dispositif de gestion de réseau (100) selon la revendication 7,
où l'unité de sélection de commutateur (1054) est prévue pour créer deux ou plusieurs ensembles de commutateurs cibles de surveillance, pour calculer une fréquence d'acquisition d'informations statistiques par rapport à chaque commutateur à une extrémité d'une liaison comprise dans le groupe de liaisons, pour sélectionner un des ensembles sur la base de la fréquence d'acquisition par rapport à chaque commutateur, et pour sélectionner les commutateurs cibles de surveillance dans l'ensemble sélectionné.

9. Procédé de gestion de réseau, comprenant :
la sélection, sur la base d'informations de topologie relatives à un groupe de liaisons formant un ensemble de liaisons dont chacune présente, à une extrémité de la liaison, un commutateur inclus dans un groupe de premiers commutateurs compris dans un réseau, d'au moins un commutateur cible de surveillance formant un ensemble de commutateurs, dont chacun comprend l'une ou l'autre extrémité de chaque liaison ;
l'acquisition d'informations statistiques des commutateurs cibles de surveillance ;
l'acquisition d'informations de trajet ;
la sélection, sur la base des informations de trajet et des informations de topologie, d'au moins un deuxième commutateur satisfaisant à une condition définie dans le groupe de premiers commutateurs;
la génération d'un groupe de liaisons, dont chacune présente l'un quelconque des deuxièmes commutateurs à une extrémité de la liaison ; et
la mise à jour des informations de topologie sur la base du groupe de liaisons généré ;
où ledit au moins un commutateur cible de surveillance est sélectionné sur la base du groupe de liaisons, et
les informations de topologie sont mises à jour de telle manière que les informations de topologie dégénèrent et que la bande passante dans le réseau demeure inchangée avant et après la mise à jour.

10. Procédé de gestion de réseau selon la revendication 9, comprenant l'acquisition des informations de topologie.

11. Programme entraînant l'exécution des processus suivants par un ordinateur commandant un dispositif de gestion de réseau relié à un groupe de premiers commutateurs :
la sélection, sur la base d'informations de topologie relatives à un groupe de liaisons formant un ensemble de liaisons dont chacune présente, à une extrémité de la liaison, un commutateur inclus dans un groupe de premiers commutateurs compris dans un réseau, d'au moins un commutateur cible de surveillance formant un ensemble de commutateurs, dont chacun comprend l'une ou l'autre extrémité de chaque liaison constituant le groupe de liaisons ;
l'acquisition d'informations statistiques des commutateurs cibles de surveillance ;
l'acquisition d'informations de trajet ;
la sélection, sur la base des informations de trajet et des informations de topologie, d'au moins un deuxième commutateur satisfaisant à une condition définie dans le groupe de premiers commutateurs;
la génération d'un groupe de liaisons, dont chacune présente l'un quelconque des deuxièmes commutateurs à une extrémité de la liaison ; et
la mise à jour des informations de topologie sur la base du groupe de liaisons généré ;
où ledit au moins un commutateur cible de surveillance est sélectionné sur la base du groupe de liaisons, et
les informations de topologie sont mises à jour de telle manière que les informations de topologie dégénèrent et que la bande passante dans le réseau demeure inchangée avant et après la mise à jour.

12. Programme selon la revendication 11, ledit programme comprenant le processus d'acquisition des informations de topologie.
